# EUROPEAN PATENT APPLICATION

(11) **EP 2 656 766 A1**
(43) Date of publication of application: **30.10.2013**
(21) Application number: 11850149.3
(22) Date of filing: 14.12.2011
(51) Int. Cl.: A47L 13/51, A47F 5/00, A47F 7/00

(54) **DISPLAY DEVICE**

(30) Priority: 23.12.2010 ES 201031302
(71) Applicant: Alcolea Magallon, Bernat, 08007 Barcelona (ES)
(72) Inventor: Alcolea Magallon, Bernat, 08007 Barcelona (ES)
(74) Representative: Durán-Corretjer, S.L.P.
(86) International application number: PCT/ES2011/070863
(87) International publication number: WO 2012/085312

(57) **Abstract**

The invention relates to a display device for securing containers that include spray heads comprising a spout and a body. The device comprises a laminar element and a projection including securing elements that form a closed loop, said loop forming a space that is occupied by the spout-shaped part of the spray head of the container.

## Description

This invention relates to a display device, preferably for displaying products in sprayer type containers.

It is well known in the state of the art that different display devices can be used to allow the visibility of articles with high sales rotation.

These display devices are usually used to advertise products in boxes or on substantially flat surfaces, or with some groove into which it is possible to fit some projection originating from the display device.

Display devices according to the prior art have a laminar base member and a projection, which may preferably be a bent rod. The rod is used to pass through a groove which may be present in the article being exhibited, and thus hanging the article securely.

These display devices are particularly useful when the item which it is desired to advertise is an item with particularly flat packaging which has grooves or which can be drilled in order to position it.

In the case where the item which has to be advertised is a container, in which it is not appropriate to make holes, the display devices in the prior art are unsuitable for use.

As a consequence this invention discloses a display device for supporting containers of the type having a sprayer type head with a beak like portion and a body, the device comprising a laminar component and openings located along the said laminar component in which supporting members forming a closed loop are fitted through the openings, the said loop forming a space occupied by the beak like portion of the container sprayer type head. In a particular embodiment, the closed loop is of elliptical shape.

Preferably, the supporting members are arranged so that they use two of the holes made along the laminar member in such a way that the major axis of the ellipse is located longitudinally to the laminar member and the minor axis is located in a plane substantially perpendicular to the laminar member.

Even more preferably the supporting members which help to support an article on the laminar member are resilient members or may comprise a clamp.

In a particular embodiment, the laminar member is of rigid material.

In a specially preferred embodiment, the openings are located vertically along the laminar member.

For a better understanding, drawings of an embodiment of the object to which this invention relates are appended by way of an explanatory but not limiting example.
Figure 1 shows a preferred embodiment of a device according to this invention.
Figure 2 shows a perspective view of the device in Figure 1.
Figure 3 is a side view of the device in Figure 1.
Figure 4 illustrates a device according to this invention for displaying several containers.
Figure 5 shows a detail of a container placed on a device according to this invention.
Figure 6 shows a method for removing a container from the device according to this invention.
Figure 7 shows a container removed from the device according to this invention.

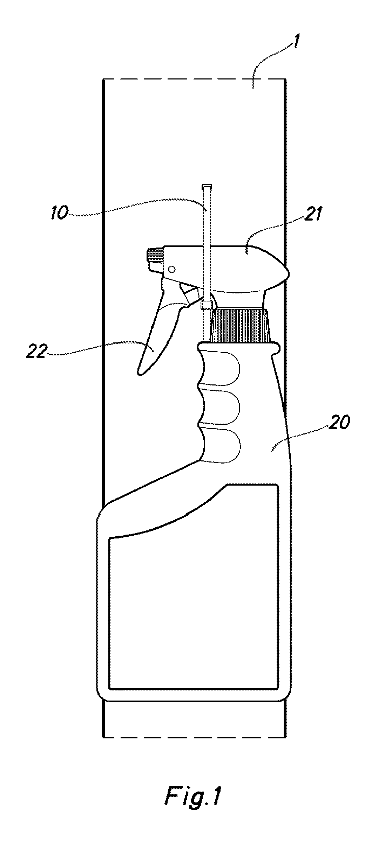

Figure 1 shows a preferred embodiment of a device according to this invention. This device comprises a laminar member -1- which serves as a support for the containers. Furthermore this embodiment has a supporting member -10- which forms a closed loop with the laminar member in such a way as to allow a container -20- to be supported, which in this case is a container with a sprayer type head -21-, this head having beak like shape, that is to say the head extends beyond the part of the body adjacent to it. This type of heads comprise a head body -21- and a trigger -22- by means of which the liquid within the container can be sprayed. Both the trigger -22-and the shape of head -21- are conventional in various containers according to the prior art.

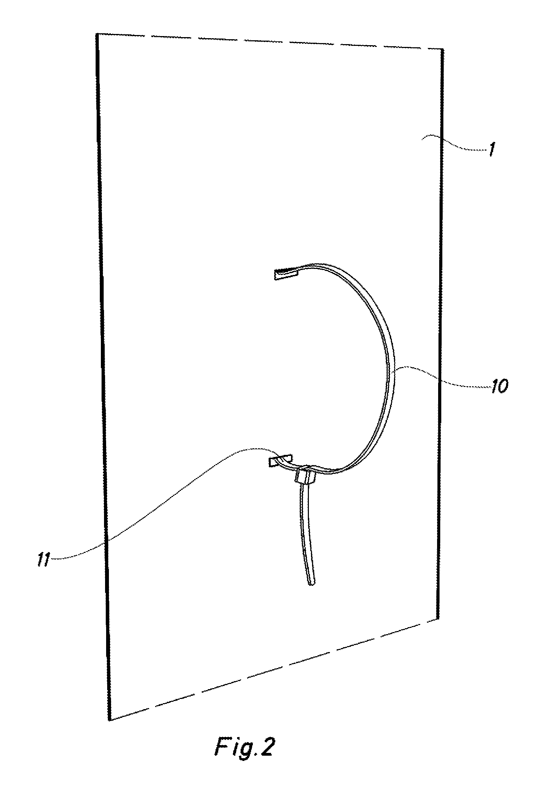

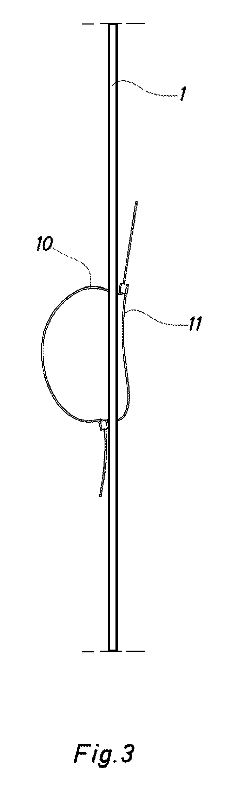

Figures 2 and 3 are views of an embodiment by way of example forming a closed loop between supporting members -10-, -11- and laminar member -1-.

In this example, two conventional clamps -10-, -11-are used to form a loop between clamps or supporting members -10-, -11- and laminar member -1-. It is important to point out that other plastics materials or any other material can be used without affecting the essential nature of this invention. It may also be possible to have a single clamp or a member specially designed for the invention to form the loop.

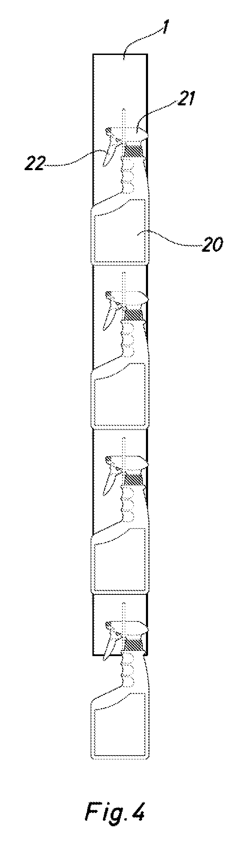

Figure 4 shows an arrangement of various containers -20- of the sprayer type on a laminar member -1-. In this view it will be seen that containers of the sprayer type are especially convenient because they comprise a head -21- and a trigger -22- which help to hold the supported member on the laminar member and being structural parts of the container ensure adequate support.

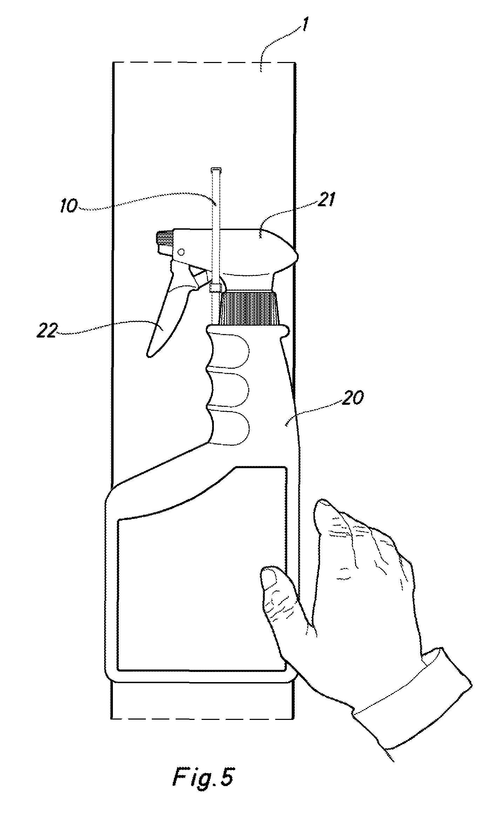

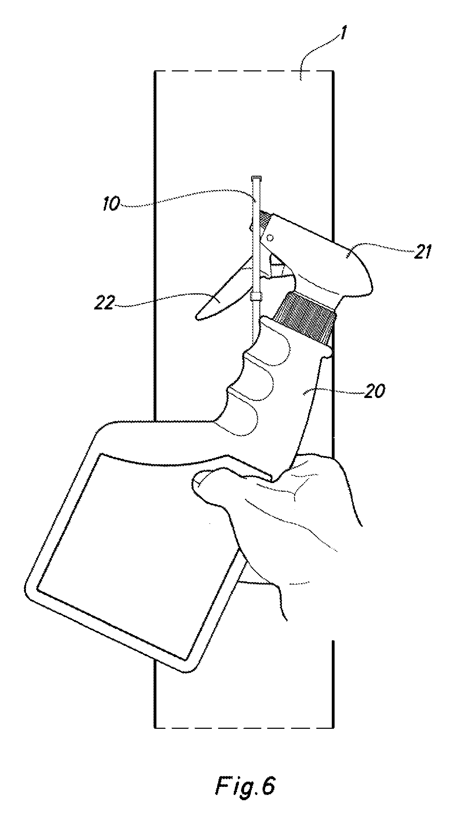

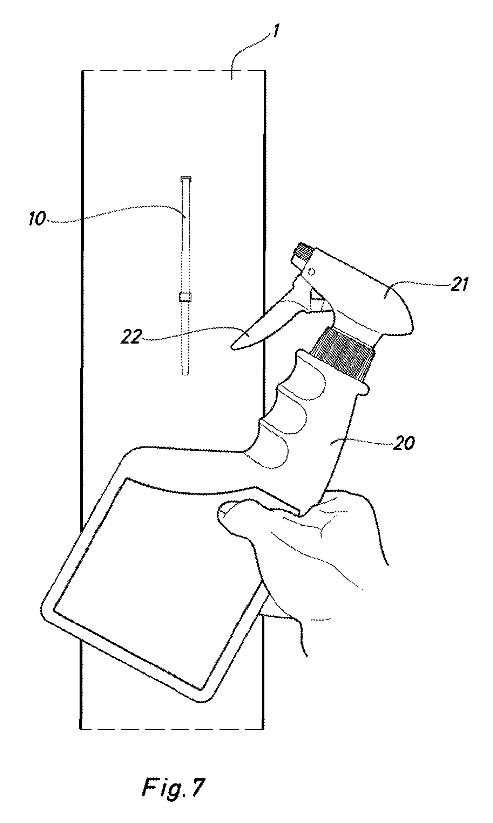

Figures 5 to 7 show the procedure for removing a container from the display device according to this invention.

The materials used to manufacture the components of a device according to this invention, the shapes and dimensions of the same and all secondary details which may be present are independent of the subject matter of the invention insofar as they do not affect its essential nature.

Although the invention has been described in relation to preferred embodiments, these must not be regarded as limiting the invention, which will be defined by the broadest interpretation of the following claims.

## Claims

1. Display device for supporting containers of the type having a sprayer type head having a beak like portion and a body, the device comprising a laminar member and a projection, the projection comprising supporting members forming a closed loop, the loop forming a space occupied by the beak like portion of the sprayer type head of the container.

2. Display device according to claim 1, **characterised in that** the said closed loop has an elliptical shape.

3. Display device according to claim 2, **characterised in that** the said supporting members are arranged using the holes provided along the laminar member in such a way that the major axis of the ellipse is located longitudinally to the laminar member and the minor axis is located in a plane substantially perpendicular to the laminar member.

4. Display device according to claim 3, **characterised in that** the holes are located vertically along the laminar member.

5. Display device according to any one of the preceding claims, **characterised in that** the supporting members comprise resilient members.

6. Display device according to any one of the preceding claims, **characterised in that** the supporting members comprise a clamp.

7. Display device according to any one of the preceding claims, **characterised in that** the laminar member is of rigid material.
